(19) Europäisches Patentamt
European Patent Office
Office européen des brevets

(11) Publication number: **0 028 113**
**B1**

(12) **EUROPEAN PATENT SPECIFICATION**

(45) Date of publication of patent specification: **10.04.85**

(51) Int. Cl.$^4$: **A 23 B 4/02**

(21) Application number: **80303695.3**

(22) Date of filing: **20.10.80**

(54) **Method of curing meats, preparation of curing solution and additive for meat curing solutions.**

(30) Priority: **26.10.79 US 88713**

(43) Date of publication of application:
**06.05.81 Bulletin 81/18**

(45) Publication of the grant of the patent:
**10.04.85 Bulletin 85/15**

(84) Designated Contracting States:
**BE DE FR GB IT NL**

(56) References cited:
**FR-A-1 580 938**
**GB-A-1 040 600**
**US-A-2 145 417**
**US-A-2 812 261**
**US-A-2 824 809**
**US-A-2 868 654**
**US-A-3 139 347**
**US-A-3 193 396**

(73) Proprietor: **STAUFFER CHEMICAL COMPANY**
**Westport Connecticut 06880 (US)**

(72) Inventor: **Brotsky, Eugene**
***5453 Covode Street***
**Pittsburgh Pennsylvania 15217 (US)**

(74) Representative: **Smith, Sydney et al**
**Elkington and Fife High Holborn House 52/54**
**High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 028 113 B1

Courier Press, Leamington Spa, England.

**Description**

The present invention relates to an improved process for preparing phosphate-containing nitrite cured meats having a lower residual nitrite level.

Hams and bacons are normally cured by pumping the same with a pickle solution. The pickle solution usually contains salt (NaCl), sugar, a nitric oxide source such as sodium nitrite or sodium nitrate, an alkaline polyphosphate salt such as sodium tripolyphosphate, sodium pyrophosphate or disodium phosphate. Other materials such as spices can be present in the curing mixture. Salts of ascorbic acid or isoascorbic acid have been found to be useful in the pickle to accelerate the formation of cured meat pigments.

The addition of the phosphate salt to the pickle solution substantially improves the yield of the cured meat product after cooking. The phosphate has the ability to bind the water or solution protein in the meat so that it does not readily escape during cooking. The resultant cooked product is more juicy, has a higher yield and is tender and with superior appearance because of reduced shrinkage during cooking.

The nitrite salt has proven to be unique inasfar as cured meat preservation, flavor and development is concerned. It is known that the nitrite has a preservative action which is specifically active against particular food spoiling organisms of the species *Clostridium* and *Salmonella* and particularly, *C. botulinum*. The nitrite also has the distinctive function of reacting with the pigments myoglobin and hemoglobin present in the pork, converting them to their nitrosyl derivatives giving bacon its characteristic color.

In theory, the active ingredient is not the nitrite per se but nitric oxide which is obtained on the breakdown of the nitrite. The nitric oxide is apparently responsible both for the color and preservation effects attributed to the nitrite. The breakdown reaction from nitrite to nitric oxide is favored by acidic pH.

The benefits of the nitrite have been offset by the recent discovery that minute amounts of undesirable nitrosamines may occur in bacon which has been cooked by methods in which the fats reach relatively high temperatures. The cooked or fried product can contain the material N-nitrosopyrrolidine, a compound known to be a carcinogen as well as the carcinogenic compound dimethylnitrosamine. Numerous studies have been undertaken regarding methods for overcoming this problem. U.S. Patent No. 4,079,153 suggest suppressing the nitrosamine formation by the use of 1,2-dihydroquinilone. U.S. Patent No. 3,966,974 suggests the use of organic nitrites which have lower temperatures of volatility.

The preservation effect of the nitrite or nitric oxide is that of a non-growth compound. Botulinum spores are destroyed upon germinating as long as the compound is in their midst thereby preventing formation of the botulism toxin. As soon as the nitrite is removed, any remaining spores can continue their germination process. The U.S. government presently assumes that a pound of bacon will be fried in the home after three weeks of the time of its curing. In order to cure a bacon product, it is necessary to achieve a high level of nitrite during curing. It is desirable to then reduce the nitrite level to a sufficiently low level during the holding period such that the frying of the bacon under such low levels of nitrite would not be a substantial health hazard.

It is pointed out that the preferred pickle solutions of the prior art contain alkaline phosphates. The alkalinity was desirable to prevent the breakdown of the nitrite into nitric oxide while the pickle solution was in the tank. The use of alkaline polyphosphate acts to stabilize the nitrite in the pickle. The admixture of a nitrite solution with an acidic compound would cause the immediate formation of the nitric oxide which would evolve from the tank. This has occurred in using sodium acid pyrophosphate or a large amount of sodium hexametaphosphate. The nitrite must be stable in the pickle but break down to form the nitric oxide in the meat to accomplish its purpose.

The alkalinity of sodium tripolyphosphate is such that the natural pH of the meat of 5.8 would be elevated and the meat would not be sufficiently acid to promote the rapid degradation of the nitrite to nitric oxide. Large nitrite residuals would, therefore, remain in the meat at the time of cooking.

Attempts have been made to replace the phosphate by the use of blends of alkali hydroxide or an alkali bicarbonate in combination with small quantities of alkali citrate or citric acid (see U.S.—A3,215,540). In one such system, the pH of the brine is elevated to 11.5—12 with sodium hydroxide and added to the meat in such an amount sufficient to raise the meat pH to a pH of about 6.5—6.7. The patent quite clearly states that the residual nitrite levels were improved significantly over a sodium tripolyphosphate control. In a ham, levels of 300% greater residuals were noted (see Table V of the patent).

Also, FR—A—1,580,938 discloses a particulate composition which is suitable for use in meat curing which contains a substantially non-reverted alkali metal (preferably sodium) tripolyphosphate and an alkali metal (preferably sodium) hydroxide. It may contain an alkali metal nitrate and/or nitrite and also sodium chloride.

Moreover, US—A—2,824,809 discloses a method of curing meat using a salt brine containing a dialkali metal (preferably disodium) phosphate and a linear alkali metal (preferably sodium) phosphate polymer.

It has now been found that the requirement for alkaline stabilization during pickling and acid breakdown during and after curing of nitrite connected with phosphate-containing nitrite pickle solutions for use in curing bacon and the problem of residual nitrites can be effectively overcome.

The present invention provides a method for preparing cured bacon from pork bellies characterised in that it comprises contacting the pork bellies with a stable curing solution comprising an alkali metal hexametaphosphate, an alkali metal chloride, a soluble nitric oxide-forming compound, a colour enhancing agent which is selected from ascorbic acid, erythorbic acid (isoascorbic acid) or salts thereof and mixtures

thereof, and sodium carbonate or bicarbonate, the pH of the bellies after contact being about equivalent to the natural pH of the bellies.

Thus, in accordance with the present invention, cured meat and cured meat products, in particular bacon, can be treated in such a way as to retain the usual benefits of phosphates of improved color, yield and flavor, while also providing low residual nitrite levels after three weeks by the use of a stable pickle containing an alkali metal, in particular sodium, hexametaphosphate, an alkali metal chloride, in particular salt (NaCl), a nitric oxide source, such as an alkali metal nitrite, and an alkalizing agent (sodium carbonate or bicarbonate) such that the pH of a typical pickle before its use is within the range of from about 5.0 to about 5.5 and after use, the pickle has a pH within the range of from about 5.5 to about 6.5. The alkalizing agent reduces nitrite degradation caused by an acidic reacting phosphate as sodium hexametaphosphate thereby forming a stable pickle.

In another aspect of the invention there is provided a method for the preparation of an aqueous stable curing solution comprising an alkali metal chloride, a soluble nitric oxide-forming compound, a colour enhancing agent as defined above and an alkaline phosphate, characterised in that one substitutes for the alkaline phosphate in the aqueous solution, either before, during or after addition of the other ingredients, a dry blend selected from (A) 93% to 97% sodium hexametaphosphate and 3 to 7% sodium bicarbonate, and (B) 75 to 85% sodium hexametaphosphate, 7 to 13% sodium acid pyrophosphate and 7 to 13% sodium bicarbonate, the percentages under subsections (A) and (B) totalling substantially 100% based on the weight of the components recited in these subsections.

In a further aspect of the invention, there is provided a method for preparing cured bacon having low residual nitrite levels characterised in that it comprises contacting pork bellies with an aqueous curing solution comprising from 10 to 20% sodium chloride, from 0.05 to 0.15% soluble nitric oxide-forming composition, a colour enhancing agent as defined above and from 2.0 to 4.5% of a composition selected from (A) from 93 to 97% sodium hexametaphosphate and from 3 to 7% sodium bicarbonate, and (B) from 75 to 85% sodium hexametaphosphate, from 7 to 13% sodium acid pyrophosphate, and from 7 to 13% sodium bicarbonate, the percentages relative to the curing solutions being by weight based on the total weight of the aqueous solution, the percentages under subsections (A) and (B) totalling substantially 100% based on the weight of the components recited in these subsections.

In yet another aspect of the invention, there is provided a stable meat curing solution additive characterised in that it comprises from 75 to 85% alkali metal hexametaphosphate, from 7 to 13% alkali metal acid pyrophosphate, and from 7 to 13% alkali metal bicarbonate, the percentages totalling substantially 100%, by weight, based on the total weight of the ingredients recited, the additive being added to an aqueous solution of an alkali metal chloride, a colour enhancing agent as defined above and a soluble nitric-oxide forming compound to form an aqueous stable curing solution.

The pH of alkaline phosphate-treated meat is generally from 0.3 pH units above the natural pH of the meat, whereas the pH of the meat treated with the disclosed invention is about equivalent to that of the natural meat, within 0.2 pH units of the meat pH. The preferred pickle solutions contain an appropriate amount of 95% sodium hexametaphosphate and 5% sodium bicarbonate or 80% sodium hexametaphosphate, 10% sodium bicarbonate and 10% sodium acid pyrophosphate, for example, in addition to the other ingredients of the pickle.

Sodium hexametaphosphate is considered a misnomer inasmuch as it is neither a metaphosphate nor does it have six units. Sodium hexametaphosphate is a medium chain length polymeric phosphate of the type:

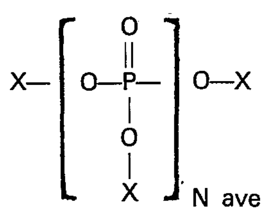

and X represents individually hydrogen or an alkali metal including ammonium and preferably sodium or potassium. $N_{ave}$ represents an average chain length between about not less than 5 and generally not more than about 25. The average chain length as employed herein is intended to represent a statistical average chain length or indication of the number of recurring units linked together comprising the anionic species. Such an average is determined by titration as described in Van Wazer et al., Analytical Anal. Chem. *26*, 1755—9 (1954).

The alkali metal acid pyrophosphate can either be sodium or potassium though the sodium acid pyrophosphate is preferred.

The alkalizing agent is sodium carbonate or bicarbonate which will effectively adjust the pH of the pickle solution to the point desired, preferably sodium bicarbonate. The use of sodium bicarbonate is particularly preferred in combination with sodium hexametaphosphate to assist in its dissolution. The sodium bicarbonate when added as part of a dry mix with sodium hexametaphosphate to an aqueous solution effervesces causing a churning action which assists in dissolving the sodium hexametaphosphate. Other alkalies can also be used though good manufacturing methods are required to dissolve the sodium

hexametaphosphate and prevent the taffy formation of wetted sodium hexametaphosphate from occurring in the tank. Taffy formation can usually be avoided by vigorous agitation.

The nitric oxide-forming compounds which are effective for the purposes of the present invention can be organic or inorganic nitrites or nitrates as is well known to one skilled in the art.

Preferably, the nitric oxide forming compound is sodium nitrite, though blends of sodium nitrite and sodium nitrate can also be used. Organic nitrites such as the $C_2$—$C_8$ alkyl nitrites and specifically, butyl nitrite, can also be used.

In addition to the nitric oxide forming compounds, the phosphate, salt, and the alkalizing agent, the pickle can contain other ingredients normally used for that purpose such as sugar, dextrose, spices and contains a colour enhancing agent which is selected from ascorbic acid, erythorbic acid (isoascorbic acid) or salts thereof and mixtures thereof.

While the composition of the present invention can be provided to the meat packer as a dry powder which, after mixing with water, forms a pickle containing all of the ingredients normally found in a pickle, it is generally preferred to provide the meat packer with a combination of alkalizing agents and phosphates. This allows the meat producer to use his own pickle formulation and blend of spices. A sufficient amount of sodium hexametaphosphate and alkalizing agent are required to be added to a pickle to maintain the natural pH of the meat and provide the desired water binding characteristics. As indicated above, this is preferably accomplished by a blend of from about 93% to about 97% sodium hexametaphosphate and from about 3% to about 7% sodium bicarbonate. Alternatively, there may be used from about 7% to about 13% sodium acid pyrophosphate and from about 7% to about 13% sodium bicarbonate and about 75—85% sodium hexametaphosphate, the foregoing percentages totalling 100% based on the weight of the components recited for the blend or the second composition. The foregoing blends can be made with the corresponding potassium salts and blends of the sodium and potassium salts. These composition can be prepared as dry powders and furnished to the meat processor to be added to his pickle, before, during or after the addition of the other ingredients of the pickle.

The compositions of the present invention upon dissolution in water to form the pickle solution can be applied to the meat by soaking or injection. A combination of these procedures can also be used. The meat can be soaked in the pickle for a sufficient time to permit the diffusion of the solution throughout the meat. Alternatively, the pickle solution can be pumped through the vascular system of the meat or injected directly into the muscle by the use of plurality of needles. After pumping or injection, the meat may be given a soaking period in the pickle. In the case of bacon, the amount of pickle solution incorporated into the meat generally ranges from about 8% to about 20%. These amounts are subject to wide variation depending on the choice of the meat processor. The process of the present invention is particularly adapted to the curing of whole skeletal meat in contrast to comminuted meat which can also be cured in accordance with the present invention. The pickle can be directly admixed with a comminuted meat system. The invention is particularly adapted to the curing of bacon because of the amounts of nitrite used and the fact that it is ultimately fried.

Meat in accordance with the present invention may be processed using standard techniques presently in use relating to storage, cooling, rate of injection, handling, tumbling and the like. In the preferred form of the invention, utilizing the blend of sodium hexametaphosphate and sodium bicarbonate or sodium hexametaphosphate, sodium acid pyrophosphate and sodium bicarbonate, the only change required is that these dry blends are added to the aqueous pickle at any convenient time prior to pumping in order to provide the necessary amount of phosphate in the pickle. The amount of these compositions actually used is such as to add about 0.25 to 0.45 percent residual phosphate salt to the meat.

In general, a curing operation is effected at a temperature of from about 1.6—55°C. The temperature of curing is preferably selected on the basis of the type of mixture and meat which is being used. To minimize microbial growth, it is preferred to employ a curing temperature within the range of about 1.67—15.6°C. Following the injection or blending of the pickled solution into the meat, it may be immediately subjected to smoking or cooking treatment. However, for commercial practice, it is preferred that following the curing treatment the meat is allowed to stand for at least one day and up to one week in order to insure adequate distribution of the curing solution through the meat. After the meat is cured, it is smoked in the usual manner by subjecting the same to a temperature of from about 48°C. to about 82°C. for a period of about 5—30 hours. Instead of smoking, the meat may be boned and placed in a can, mold or fibrous container and cooked to an internal temperature sufficient to coagulate the meat protein. In the case of bacon, the bacon can be smoked as a side or slab or the meat can be sliced prior to smoking.

The amount of residual nitrite as used herein is determined by A.O.A.C. method 24.037 and 24.038 modified by adjusting the pH of the nitrite-containing solution extracted from the meat to neutral to minimize loss of nitrite during extraction. A period of three weeks has been set by the U.S. Government as a minimum length of time it takes for bacon to go from the curing floor to the frying pan. Results are reported on that basis.

The present invention will be illustrated in the examples which follow.

Examples 1—9

(Examples 8 and 9 are in accordance with the present invention, while Examples 1—7 are for comparison purposes.)

The curing effect was shown in a model system. 45.5 kilograms of fresh pork bellies (15) ranging in size from 2.27 to 3.55 kilograms were ground through a grinder having a plate with 0.95 centimeter openings. Samples each containing 4085 grams of ground pork bellies were mixed with a pickle in a Hobart™ mixer for 4-1/2 minutes at speed No. 1. A bulk pickle of the following composition was prepared:

TABLE I

| | | |
|---|---|---|
| Salt | 920 grams | 15.5% |
| Sugar | 325 grams | 5.5% |
| Sodium Erythorbate | 35 grams | .6% |
| Dextrose | 50 grams | .8% |
| Water (10°C.) | 4600 grams | 77.6% |
| | 5930 grams | 100% |

430 milliliters of nitrite free pickle were removed for Examples 1 and 2. Then 6.96 grams (0.126%) sodium nitrite dissolved in about 20 milliliters water were added to the remaining pickle.

The 430 grams of nitrite free pickle were divided into two 215 grams samples. A 4086 gram sample of meat was divided into two 2043 grams sample. In Example 1, the 215 milliliters of pickle were blended with 2043 grams of meat to provide a control with no nitrite and no phosphate. The remaining pickle and meat were mixed together with 8.8 grams of dry sodium tripolyphosphate to provide Example 2 having no nitrite with phosphate. A third sample with nitrite and no phosphate (Example 3) was prepared by mixing 215 milliliters of the nitrite containing pickle with 2043 grams of meat. The remaining examples were prepared by blending 430 milliliters of nitrite containing pickle, 4086 grams of chopped pork bellies and 17.6 grams of a dry phosphate additive as set forth in the table below:

TABLE II

| | |
|---|---|
| Example 4 | Sodium Tripolyphosphate |
| Example 5 | Blend of 90% Sodium Tripolyphosphate<br>10% Sodium Hexametaphosphate |
| Example 6 | 80% Sodium Tripolyphosphate<br>20% Sodium Hexametaphosphate |
| Example 7 | Sodium Hexametaphosphate |
| Example 8 | 95% Sodium Hexametaphosphate<br>5% Sodium Bicarbonate |
| Example 9 | 80% Sodium Hexametaphosphate<br>10% Sodium Acid Pyrophosphate<br>10% Sodium Bicarbonate |

Each sample was then tightly packed in a stainless steel pan to a thickness of about 3.8 centimeters using another pan as a compressor. The samples were subjected to 2 vacuum cycles to remove air voids, compressed again and chilled overnight at 1.67°C. The samples were heat processed in a smokehouse using the following temperature schedule.

TABLE III

| | Temperature | |
|---|---|---|
| Time | Dry bulb | Wet bulb |
| Preheat | 43.3°C. | 35°C. |
| 5 Hours 20 Minutes | 43.3°C. | 35°C. |
| 1 Hour | 65.6°C. | — |

After cooking, the samples were held in a cooled room at 1.67°C. Samples were sliced on a commercial slicer at setting 10. A portion of each sample was tested for nitrite concentration. The average residual nitrite level of a no nitrite/no phosphate sample (Example 1) and no nitrite/sodium tripolyphosphate sample (Example 2) was subtracted from the gross nitrite readings of Examples 3—9 to obtain the residual nitrite for each sample. The pH's of the cured meat samples were also taken. The following results were obtained.

TABLE IV

| Days | | 0 | 7 | 14 | 21 | 28 |
|---|---|---|---|---|---|---|
| Example 1 | pH | 5.8 | 5.9 | 5.8 | 5.7 | 5.5 |
| ppm-nitrite | | 6.0 | 2.1 | 1.7 | 1.7 | 2.1 |
| Example 2 | pH | 6.4 | 6.3 | 6.2 | 6.1 | 6.0 |
| ppm-nitrite | | 7.7 | 3.4 | — | 0.4 | 3.4 |
| Average ppm nitrite for Blind sample | | 6.8 | 2.8 | 1.7 | 1.1 | 2.8 |

| Days | | 0 | 7 | 14 | 21 | 28 |
|---|---|---|---|---|---|---|
| Example 3 | pH | 6.1 | 6.1 | 6.0 | 6.1 | 5.8 |
| ppm-nitrite | | 34.8 | 31.6 | 15.3 | 22.7 | 9.1 |
| Example 4 | pH | 6.4 | 6.4 | 6.3 | 6.3 | 6.3 |
| ppm-nitrite | | 57.3 | 45.2 | 31.5 | 32.1 | 16.3 |
| Example 5 | pH | 6.4 | 6.4 | 6.3 | 6.3 | 6.3 |
| ppm-nitrite | | 57.7 | 48.6 | 36.6 | 33.3 | 23.1 |
| Example 6 | pH | 6.4 | 6.3 | 6.3 | 6.3 | 6.2 |
| ppm-nitrite | | 58.6 | 42.7 | 30.2 | 28.1 | 16.3 |
| Example 7 | pH | 6.0 | 6.1 | 6.0 | 6.0 | 6.0 |
| ppm-nitrite | | 27.1 | 18.0 | 7.7 | 10.8 | 9.5 |
| Example 8 | pH | 6.2 | 6.1 | 6.1 | 6.2 | 6.0 |
| ppm-nitrite | | 33.9 | 23.1 | 11.5 | 10.8 | 6.6 |
| Example 9 | pH | 6.2 | 6.1 | 6.1 | 6.2 | 6.1 |
| ppm-nitrite | | 34.8 | 28.7 | 18.7 | 12.5 | 10.0 |

As it can be seen from a review of this data, the use of the invention compositions (Examples 8 and 9) provide nitrite residuals and pH values similar to the no-phosphate sample (Example 3) and significantly less than those provided by the alkaline phosphates (Examples 4, 5 and 6). Sodium hexametaphosphate (Example 7) provides the most rapid nitrite but its pickle solutions are not stable as shown later in Examples 16—24. Since the U.S. government has indicated that bacon is generally cooked after three weeks from its date of packing, the nitrite levels of bacon prepared in accordance with the present invention would be low enough to prevent substantial formation of nitrosamine but still retain color, flavor and bacterial inhibition characteristics of the nitrite.

Example 10

A pickle solution was prepared by dissolving 18.56 kg salt (NaCl), 6.98 kg sugar, 2.84 kg of a commercial phosphate blend of about 75% sodium tripolyphosphate and about 25% sodium hexametaphosphate or 2.84 kg of a blend of about 95% sodium hexametaphosphate and about 5% sodium bicarbonate in 112.88 kg water. After holding the pickle overnight at 1.67°C., 113.2 gms sodium nitrite and 509.4 gms sodium erythorbate dissolved in a small quantity of water (about 20 ml) were admixed with the pickle. A pickle without the phosphate was also prepared.

Paired bellies were injected at 10°C. The bacon was processed and smoked the same day. The smokehouse processing schedule is given in Table V.

After processing, the bacon was hung for six days at 1.67°C. then the bacon was sliced and samples were taken for four consecutive weeks. The results are set forth in Tables VI and VII.

TABLE V

| | Dry bulb | Wet bulb |
|---|---|---|
| 0—15 Minutes | 0 to 60°C. | 0 to 48.9°C. |
| 15—90 Minutes | 60°C. to 65.5°C. | 48.9°C. to 51.6°C. |
| 90—150 Minutes | 65.5°C. to 71.1°C. | 51.6°C. to 54.4°C. |
| 150—180 Minutes | 71.1°C. to 51.6°C. | 54.4°C. to 32.2°C. |
| 180—240 Minutes | 51.6°C. to 43.3°C. | 32.2°C. to 35°C |
| 240—420 Minutes | 43.3°C. to 37.8°C. | 35°C. to 35°C. |

TABLE VI

| Ex. | Type | Green wgt. g | Immediate pumped wgt. g | Immediate % pump | After 30 minutes % pump | Smoked wgt. g | Cooked yield as % of green wgt. |
|---|---|---|---|---|---|---|---|
| 10L | A | 4715 | 5631 | 19 | 16 | 4980 | 106 |
| R | B | 4675 | 5644 | 21 | 16 | 4973 | 106 |
| 11R | A | 5220 | 5964 | 14 | 14 | 5430 | 104 |
| L | B | 4757 | 5484 | 15 | 13 | 4984 | 105 |
| 12R | A | 4540 | 5260 | 16 | 15 | 4641 | 102 |
| L | C | 4940 | 5793 | 17 | 14 | 5114 | 104 |
| 13L | A | 5410 | 6212 | 15 | 13 | 5625 | 104 |
| R | C | 5248 | 6100 | 16 | 14 | 5500 | 105 |
| 14L | B | 4955 | 5702 | 15 | 12 | 5188 | 105 |
| R | C | 5605 | 6641 | 18 | 16 | 6007 | 107 |
| 15R | B | 4868 | 5760 | 18 | 14 | 5089 | 105 |
| L | C | 4680 | 5489 | 17 | 15 | 4970 | 106 |

A=95% Hexametaphosphate/5% Sodium Bicarbonate
B=75% Sodium Tripolyphosphate/25% Sodium Hexametaphosphate (comparison)
C=No Phosphate (comparison)

TABLE VII

| | Week 0 | | Week 1 | | Week 2 | |
|---|---|---|---|---|---|---|
| Ex. | pH | Gross ppm nitrite | pH | Gross ppm nitrite | pH | Gross ppm nitrite |
| 10L | 5.8 | 21.7 | 5.8 | 8.1 | 5.8 | 7.7 |
| R | 6.0 | 34.0 | 6.0 | 20.4 | 6.0 | 10.2 |
| 11R | 6.0 | 22.1 | 6.0 | 13.2 | 6.0 | 6.4 |
| L | 6.0 | 22.1 | 6.1 | 14.0 | 6.1 | 9.8 |
| 12R | 5.8 | 17.4 | 5.8 | 11.5 | 5.8 | 6.4 |
| L | 5.7 | 17.4 | 5.7 | 8.5 | 5.6 | 8.5 |
| 13L | 5.9 | 20.0 | 6.0 | 9.4 | 6.0 | 6.4 |
| R | 5.7 | 24.7 | 5.7 | 12.8 | 5.7 | 7.7 |
| 14L | 5.9 | 19.1 | 5.9 | 8.9 | 5.9 | 4.3 |
| R | 5.4 | 13.2 | 5.5 | 7.2 | 5.5 | 6.0 |
| 15R | 6.1 | 33.2 | 6.1 | 22.1 | 6.0 | 13.4 |
| L | 5.7 | 29.3 | 5.8 | 13.6 | 5.8 | 5.3 |

As can be seen from Table VII, generally the bacon prepared in accordance with the present invention had significant reductions in residual nitrite compared to alkaline phosphate bacon and nitrite and pH values were about equivalent to no-phosphate bacon.

Pickle stability

The stability of pickle solutions described in the invention are illustrated below.

Pickle solutions were formulated to provide the same level of ingredients in bacon as described in Examples 1—9, when injected at a 10% pump level;

74.5% water, 14.7% salt, 6.0% sugar, 0.547% sodium erythorbate,
0.12% sodium nitrite and 4.0% phosphate-containing composition (or water control).
The following phosphate-containing composition were used:

| | |
|---|---|
| Example 16 (comparison) | Sodium Hexametaphosphate |
| Example 17 (comparison) | 65% sodium Tripolyphosphate<br>35% Sodium Hexametaphosphate |
| Example 18 | 84% Sodium Hexametaphosphate<br>6% Sodium Bicarbonate<br>10% Sodium Acid Pyrophosphate |
| Example 19 (comparison) | Water Control |
| Example 20 | 79% Sodium Hexametaphosphate<br>6% Sodium Bicarbonate<br>15% Sodium Acid Pyrophosphate |
| Example 21 | 97% Sodium Hexametaphosphate<br>3% Sodium Bicarbonate |

The pickle solutions were agitated at a constant rate at 10°C. for 8 hours, then held static an additional 16 hours at 10°C. Results appear in Table VIII.

TABLE VIII

| Example | ppm nitrite | | | | | | pH | |
|---|---|---|---|---|---|---|---|---|
| | 0 hrs. | 2 hrs. | 4 hrs. | 6 hrs. | 8 hrs. | 24 hrs. | Initial | 24 hr. |
| 16 | 1003 | 535 | 378 | 285 | 238 | 26 | 5.0 | 5.8 |
| 17 | 1062 | 1126 | 1020 | 1071 | 1160 | 1169 | 6.6 | 6.6 |
| 18 | 1020 | 961 | 820 | 710 | 710 | 302 | 5.4 | 6.4 |
| 19 | 1020 | 1084 | 1024 | 995 | 1110 | 1084 | 7.0 | 6.6 |
| 20 | 1041 | 850 | 659 | 527 | 476 | 81 | 5.3 | 6.1 |
| 21 | 1020 | 973 | 892 | 884 | 939 | 76 | 5.6 | 6.7 |

The results show good nitrite stability (less than 20% nitrite loss after 8 hours), i.e., stable pickle solutions for the alkaline phosphate (Example 17), no-phosphate (Example 19) and the invention (Example 21). Pickle solutions with a high ratio of acidic phosphate to bicarbonate (Examples 18 and 20) have less stability and hexametaphosphate alone (Example 16 is the least stable.

In addition, examples of pickle formulations used by a commercial bacon processor were prepared to contain: 80.2% water, 10.7% salt, 6.7% sugar, 0.28% sodium erythorbate, 0.06% sodium nitrite, 1.7% phosphate-containing composition, 0.5% dextrose and .05% dextrose and .05% sodium citrate.

The phosphate-containing compositions were:

| | |
|---|---|
| Example 22 (comparison) | Sodium Hexametaphosphate |
| Example 23 (comparison) | 90% Sodium Tripolyphosphate<br>10% Sodium Hexametaphosphate |
| Example 24 | 95% Sodium Hexametaphosphate<br>5% Sodium Bicarbonate |

The pickle solutions were agitated at constant RPM for four hours at 10°C., then held static for an additional 14 hours. Results are presented in Table IX

TABLE IX

| Example | ppm nitrite | | | | Final pH |
|---|---|---|---|---|---|
| | 0 hrs. | 2 hrs. | 4 hrs. | 20 hrs. | |
| 22 | 506 | 484 | 387 | 149 | 6.5 |
| 23 | 493 | 536 | 561 | 510 | 6.7 |
| 24 | 510 | 544 | 561 | 468 | 7.2 |

These results again show that alkaline phosphate (Example 23) and the invention (Example 24) provide stable pickle solutions whereas the hexametaphosphate pickle solution is not stable.

## Claims

1. A method for preparing cured bacon from pork bellies characterised in that it comprises contacting the pork bellies with a stable curing solution comprising an alkali metal hexametaphosphate, an alkali metal chloride, a soluble nitric oxide-forming compound, a colour enhancing agent which is selected from ascorbic acid, erythorbic acid (isoascorbic acid) or salts thereof and mixtures thereof, and sodium

carbonate or bicarbonate, the pH of the bellies after contact being about equivalent to the natural pH of the bellies.

2. A method as claimed in claim 1 characterised in that the curing solution comprises sodium hexametaphosphate, sodium chloride, a soluble nitric oxide-forming compound and sodium carbonate or bicarbonate.

3. A method as claimed in claim 2 characterised in that sodium bicarbonate is used.

4. A method as claimed in any of claims 1 to 3 characterised in that the curing solution further includes sugar.

5. A method as claimed in any of claims 1 to 4 characterised in that the curing solution further includes an alkali metal acid pyrophosphate.

6. A method for the preparation of an aqueous stable curing solution comprising an alkali metal chloride, a soluble nitric oxide-forming compound, a colour enhancing agent as defined in claim 1 and an alkaline phosphate, characterised in that one substitutes for the alkaline phosphate in the aqueous solution, either before, during or after addition of the other ingredients, a dry blend selected from (A) 93 to 97% sodium hexametaphosphate and 3 to 7% sodium bicarbonate, and (B) 75 to 85% sodium hexametaphosphate, 7 to 13% sodium acid pyrophosphate and 7 to 13% sodium bicarbonate, the percentages under sub-sections (A) and (B) totalling substantially 100% based on the weight of the components recited in these sub-sections.

7. A method for preparing cured bacon having low residual nitrite levels characterised in that it comprises contacting pork bellies with an aqueous curing solution comprising from 10 to 20% sodium chloride, from 0.05 to 0.15% soluble nitric oxide-forming composition, a colour enhancing agent as defined in claim 1 and from 2.0 to 4.5% of a composition selected from (A) from 93 to 97% sodium hexametaphosphate, and from 3 to 7% sodium bicarbonate, and (B) from 75 to 85% sodium hexametaphosphate, from 7 to 13% sodium acid pyrophosphate, and from 7 to 13% sodium bicarbonate, the percentages relative to the curing solution being by weight based on the total weight of the aqueous solution, the percentages under sub-sections (A) and (B) totalling substantially 100% based on the weight of the components recited in these sub-sections.

8. A stable meat curing solution additive characterised in that it comprises from 75 to 85% alkali metal hexametaphosphate, from 7 to 13% alkali metal acid pyrophosphate, and from 7 to 13% alkali metal bicarbonate, the percentages totalling substantially 100%, by weight, based on the total weight of the ingredients recited, the additive being added to an aqueous solution of an alkali metal chloride a colour enhancing agent as defined in claim 1 and a soluble nitric oxide-forming compound to form an aqueous stable curing solution.

9. An additive as claimed in claim 8 characterised in that the alkali metal of the ingredients is sodium.

10. An additive as claimed in claim 9 comprising 80% sodium hexametaphosphate, 10% sodium acid pyrophosphate and 10% sodium bicarbonate.

**Patentansprüche**

1. Verfahren zur Herstellung von konserviertem Speck aus Schweinebauch, dadurch gekennzeichnet, daß der Schweinebauch mit einer stabilen Konservierungslösung in Berührung gebracht wird, die ein Alkalimetallhexametaphosphat, ein Alkalimetallchlorid, eine lösliche, Stickstoff(II)-oxid bildende Substanz, ein farbverstärkendes Mittel, nämlich Ascorbinsäure, Erythorbinsäure (Isoascorbinsäure) oder deren Salze und deren Gemische, und Natriumcarbonat oder Natriumhydrogencarbonat enthält, wobei der pH-Wert der Schweinebäuche nach dieser Behandlung ungefähr gleich dem neutralen pH-Wert der Schweinebäuche ist.

2. Verfahren nach Anspruch 1, dadurch gekennzeichnet, daß die Konservierungslösung Natriumhexametaphosphat, Natriumchlorid, eine lösliche, Stickstoff(II)-oxid bildende Substanz und Natriumcarbonat oder Natriumhydrogencarbonat enthält.

3. Verfahren nach Anspruch 2, dadurch gekennzeichnet, daß Natriumhydrogencarbonat eingesetzt wird.

4. Verfahren nach einem der Ansprüche 1 bis 3, dadurch gekennzeichnet, daß die Konservierungslösung außerdem Zucker enthält.

5. Verfahren nach einem der Ansprüche 1 bis 4, dadurch gekennzeichnet, daß die Konservierungslösung außerdem ein saures Alkalimetallpyrophosphat enthält.

6. Verfahren zur Herstellung einer wässrigen stabilen Konservierungslösung enthaltend ein Alkalimetallchlorid, eine lösliche Stickstoff(II)-oxid bildende Substanz, ein farbverstärkendes Mittel, wie im Anspruch 1 definiert, und ein Alkalimetallphosphat, dadurch gekennzeichnet, daß das Alkalimetallphosphat in der wässrigen Lösung vor, während oder nach der Zugabe der anderen Bestandteile durch ein trockenes Gemisch ersetzt wird, das (A) 93 bis 97% Natriumhexametaphosphat und 3 bis 7% Natriumhydrogencarbonat oder (B) 75 bis 85% Natriumhexametaphosphat, 7 bis 13% saures Natriumpyrophosphat und 7 bis 13% Natriumhydrogencarbonat enthält, wobei, bezogen auf das Gewicht der unter lit (A) und (B) genannten Komponenten, die unter lit (A) und (B) genannten Prozentangaben jeweils so gewählt werden, daß ihre Summe im wesentlichen 100% beträgt.

7. Verfahren zur Herstellung von konserviertem Speck mit geringer Nitrit-Restkonzentration, dadurch

gekennzeichnet, daß Schweinebäuche mit einer wässrigen Konservierungslösung in Berührung gebracht werden, die 10 bis 20% Natriumchlorid, 0,05 bis 0,15% einer löslichen, Stickstoff(II)-oxid bildenden Substanz, ein farbverstärkendes Mittel, wie im Anspruch 1 definiert, und 2,0 bis 4,5% einer Mischung der Zusammensetzung (A) 93 bis 97% Natriumhexametaphosphat und 3 bis 7% Natriumhydrogencarbonat oder (B) 75 bis 85% Natriumhexametaphosphat, 7 bis 13% saures Natriumpyrophosphat und 7 bis 13% Natriumhydrogencarbonat, enthält, wobei die auf die Konservierungslösung bezogenen Prozentangaben auf das Gesamtgewicht der wässrigen Lösung bezogen sind und die auf das Gewicht der unter lit (A) und (B) genannten Komponenten bezogenen Prozentangaben unter lit (A) und (B) so gewählt sind, daß sie in der Summe im wesentlichen 100% ergeben.

8. Stabiler Zusatz für eine Fleischkonservierungslösung, gekennzeichnet durch einen Gehalt von 75 bis 85% Alkalimetallhexametaphosphat, 7 bis 13% eines sauren Alkalimetallpyrophosphats und 7 bis 13% eines Alkalimetallhydrogencarbonats, wobei diese Prozentangaben jeweils so gewählt werden, daß sie zusammen im wesentlichen 100% ergeben, und wobei diese Prozentangaben weiterhin auf das Gesamtgewicht aller genannten Bestandteile bezogen sind, und wobei der Zusatz bestimmungsgemäß zu einer wässrigen Lösung eines Alkalimetallchlorids, eines farbverstärkenden Mittels, wie im Anspruch 1 definiert, und einer löslichen Stickstoff(II)-oxid bildenden Substanz zur Bildung einer stabilien, wässrigen Konservierungslösung zugesetzt wird.

9. Zusatz nach Anspruch 8, dadurch gekennzeichnet, daß das Alkalimetall der Bestandteile Natrium ist.

10. Zusatz nach Anspruch 9, gekennzeichnet, durch einen Gehalt von 80% Natriumhexametaphosphat, 10% saures Natriumpyrophosphat und 10% Natriumhydrogencarbonat.

**Revendications**

1. Procédé de préparation de lard traité à partir de panses de porc, caractérisé en ce qu'il consiste à mettre en contact des panses de porc avec une solution de traitement stable comprenant un hexamétaphosphate de métal alcalin, un chlorure de métal alcalin, un composé soluble de formation d'oxyde nitrique, un agent d'amélioration de la couleur qui est choisi parmi acide ascorbique, acide érythorbique (acide isoascorbique) ou des sels ou des mélanges de ceux-ci, et carbonate de sodium ou bicarbonate de sodium, le pH des panses après contact étant approximativement de l'ordre du pH naturel des panses.

2. Procédé selon la revendication 1, caractérisé en ce que la solution de traitement comprend de l'hexamétaphosphate de sodium, du chlorure de sodium, un composé soluble de formation d'acide nitrique et du carbonate ou bicarbonate de sodium.

3. Procédé selon la revendication 2, caractérisé en ce que l'on utilise du bicarbonate de sodium.

4. Procédé selon une quelconque des revendications 1 à 3, caractérisé en ce que la solution de traitement comprend en outre du sucre.

5. Procédé selon une quelconque des revendications 1 à 4, caractérisé en ce que la solution du traitement comprend en outre un pyrophosphate acide de métal alcalin.

6. Procédé de préparation d'une solution de traitement aqueuse stable comprenant un chlorure de métal alcalin, un composé soluble de formation d'acide nitrique, un agent d'amélioration de la couleur tel que défini dans la revendication 1 et un phosphate alcalin, caractérisé en ce que l'on substitue au phosphate alcalin dans la solution aqueuse avant, pendant ou après l'addition des autres ingrédients, un mélange sec consistant en:

(A) 93 à 97% d'hexamétaphosphate de sodium et 3 à 7% de bicarbonate de sodium; ou

(B) 75 à 85% d'hexamétaphosphate de sodium, 7 à 13% de pyrophosphate de sodium et 7 à 13% de bicarbonate de sodium,

le total des pourcentages dans les points (A) et (B) atteignant sensiblement 100% par rapport au poids des composants cités dans ces points.

7. Procédé de préparation de lard traité ayant de faibles niveaux de nitrite résiduel, caractérisé en ce qu'il consiste à mettre en contact les panses de porc avec une solution de traitement aqueuse comprenant de 10 à 20% de chlorure de sodium, de 0,05 à 0,15% d'une composition de formation d'oxyde nitrique soluble, un agent d'amélioration de la couleur tel que défini dans la revendication 1 et de 2,0 à 4,5% d'une composition consistant en:

(A) 93 à 97% d'hexamétaphosphate de sodium et 3 à 7% de bicarbonate de sodium; ou

(B) 75 à 85% d'hexamétaphosphate de sodium, 7 à 13% de pyrophosphate acide de sodium et 7 à 13% de bicarbonate de sodium;

les pourcentages relatifs à la solution de traitement étant exprimés en poids par rapport au poids total de la solution aqueuse, letotal des pourcentages indiqués sous les popints (A) et (B) atteignant sensiblement 100% par rapport au poids des composants cités dans ces points dans ces points.

8. Additif stable à une solution de traitement de la viande, caractérisé en ce qu'il comprend de 75 à 85% d'hexamétaphosphate de métal alcalin, de 7 à 13% de pyrophosphate acide de métal alcalin et de 7 à 13% de bicarbonate de métal alcalin, le total de ces pourcentages atteignant sensiblement 100% en poids par rapport au poids total des ingrédients cités, l'additif étant ajouté à une solution aqueuse d'un chlorure de métal alcalin, d'un agent d'amélioration de la couleur tel que défini dans la revendication 1, et d'un dérivé soluble de formation d'oxyde nitrique pour former une solution aqueuse stable de traitement.

9. Additif selon la revendication 8, caractérisé en ce que le métal alcalin desdits ingrédients est le sodium.

10. Additif selon la revendication 9, comprenant 80% d'hexamétaphosphate de sodium, 10% de pyrophosphate acide de sodium et 10% de bicarbonate de sodium.